# EUROPÄISCHE PATENTSCHRIFT

(11) **EP 4 390 195 B1**
(45) Veröffentlichungstag und Bekanntmachung des Hinweises auf die Patenterteilung: **29.01.2025**
(21) Anmeldenummer: 22215531.9
(22) Anmeldetag: 21.12.2022
(51) Int. Cl.: F16K 31/06, F16K 31/08

(54) **ELEKTROMAGNETISCH BETÄTIGTES VENTIL**
ELECTROMAGNETICALLY OPERATED VALVE
SOUPAPE À COMMANDE ÉLECTROMAGNÉTIQUE

(43) Veröffentlichungstag der Anmeldung: 26.06.2024
(73) Patentinhaber: AVS, Ingenieur J.C. Römer GmbH, 94481 Grafenau (DE)
(72) Erfinder: Dirndorfer, Florian, 94481 Grafenau (DE); Mück, Andreas, 94481 Grafenau (DE); Absmeier, Michael, 94481 Grafenau (DE); Grill, Pascal, 94481 Grafenau (DE)
(74) Vertreter: Wolf, Gerhard

(56) Entgegenhaltungen:
- EP-A2- 1 277 694
- CA-A1- 2 304 330
- DE-A1- 2 921 832
- JP-A- S6 113 076
- US-A1- 2020 018 417
- US-A1- 2022 235 875
- US-B2- 9 897 225

## Beschreibung

Die Erfindung betrifft ein magnetisch betätigtes Ventil zur Steuerung eines Fluidflusses. Das Ventil ist insbesondere für hygienesensitive Anwendungen im Lebensmittelbereich vorgesehen.

Elektromagnetisch betätigte Ventile sind grundsätzlich bekannt. Insbesondere sind elektromagnetisch betätigte Ventile bekannt, bei denen ein Ventilkörper durch ein Magnetfeld eines Elektromagneten translatorisch bewegt wird, um einen Fluidfluss durch das Ventil zu ermöglichen. Die Rückstellung des Ventilkörpers erfolgt über eine Rückstellfeder, die selbst fluidumströmt ist. Häufig verläuft der Fluidkanal derartiger elektromagnetisch betätigter Ventile durch den Ventilkörper selbst hindurch, d.h. im Ventilkörper ist ein Durchführungskanal gebildet, durch den hindurch das Fluid fließen muss, um zum Auslass zu gelangen.

Ein wesentlicher Nachteil derartiger Ventile besteht darin, dass diese fluidberührte Toträume aufweisen, in denen kein Fluidfluss oder nur ein Fluidfluss mit sehr geringer Fließgeschwindigkeit stattfindet, so dass sich dort Ablagerungen bilden können. Derartige fluidberührte Toträume liegen insbesondere im Bereich der Rückstellfeder. Die Anwendung derartiger Ventile in hygienesensitiven Bereichen ist damit nachteilig, da die Hygieneanforderungen durch aufwendiges Spülen erreicht werden müssen. Zudem weisen die bekannten Ventile hohe Strömungsverluste auf, was deren Anwendungsgebiete zusätzlich einschränkt.

Die Druckschrift EP 1 277 694 A2 offenbart ein Fluidventil zur Abgabe flüssiger Medien. Das Fluidventil weist einen elektromagnetisch betätigten Ventilkörper auf, der umfangsseitig umströmt ist.

Die Druckschrift US 2020/0018417 A1 offenbart ein bistabiles Ventil, das einen Einlass, einen Auslass und eine Ausstoßöffnung zur Atmosphäre hin aufweist.

Ausgehend hiervon ist es Aufgabe der Erfindung, ein Ventil anzugeben, das totraumarm ausgebildet ist und geringe Strömungsverluste aufweist.

Die Aufgabe wird durch ein Ventil mit den Merkmalen des unabhängigen Patentanspruchs 1 gelöst. Bevorzugte Ausführungsformen sind Gegenstand der Unteransprüche.

Gemäß einem Aspekt bezieht sich die Erfindung auf ein Ventil zur Steuerung eines Fluidstroms. Das Fluid ist insbesondere eine Flüssigkeit. Das Ventil umfasst ein Ventilgehäuse mit einem Fluidkanal, das einen Einlass, einen Auslass und einen Ventilsitz aufweist. Zudem ist ein im Ventilgehäuse bewegbarer Ventilkörper zum Öffnen und Schließen des Ventils und ein Permanentmagnet vorgesehen. Am Ventilgehäuse ist ferner eine elektrische Spule angeordnet, die zur Erzeugung eines auf den Ventilkörper wirkenden Magnetfeldes ausgebildet ist.

Der Ventilkörper ist entlang der Längsachse des Fluidkanals in dem Ventilgehäuse verschiebbar. Der Fluidkanal des Ventilgehäuses bildet vorzugsweise eine Gleitführung für den Ventilkörper. Der Ventilkörper weist ein dem Einlass zugewandtes erstes freies Ende und ein dem Auslass zugewandtes zweites freies Ende auf. Der Ventilkörper wirkt mit seinem zweiten freien Ende mit dem Ventilsitz zusammen, um das Ventil zu öffnen oder zu schließen.

Der Ventilkörper ist zumindest teilweise aus einem Ferritmaterial gebildet und bildet einen Anker, der zum einen mit dem Permanentmagneten, zum anderen mit der elektrischen Spule zusammenwirkt. Der Permanentmagnet ist dazu ausgebildet, auf den Ventilkörper eine in Richtung des Ventilsitzes wirkende Kraft aufzubringen und damit das Ventil zu schließen. Bei Beaufschlagung der Spule mit elektrischem Strom ist der Ventilkörper durch das von der elektrischen Spule erzeugte Magnetfeld vom Ventilsitz abhebbar, um das Ventil zu öffnen. Der Ventilkörper ist zum ersten freien Ende hin zulaufend ausgebildet und wird von dem durch den Fluidkanal fließenden Fluid außenseitig umströmt. Der Ventilkörper wird vorzugsweise lediglich außenseitig umströmt, d.h. er weist keinen Durchbruch oder Innenkanal auf, durch den das Fluid fließen muss, um zum Auslass zu gelangen.

Der technische Vorteil des Ventils besteht darin, dass dieses totraumarm ausgebildet ist und sich damit zum Einsatz in hygienesensitiven Anwendungsbereichen eignet. Darüber hinaus weist das Fluidventil aufgrund des in Längsrichtung außenseitig umströmten Ventilkörpers und dessen zulaufend ausgebildeten ersten freien Endes eine strömungsoptimierte Geometrie auf, so dass Bereiche mit geringer Fluidfließgeschwindigkeit vermieden werden, was wiederum vorteilhaft für hygienesensitive Anwendungen ist.

Gemäß einem Ausführungsbeispiel weist der Ventilkörper außenseitig und/oder die Innenfläche des Ventilgehäuses in dem Fluidkanalbereich, in dem der Ventilkörper bewegt wird, eine Oberflächenkonturierung auf, mittels der umfangsseitig um den Ventilkörper herum verteilt mehrere Fluidkanalbereiche gebildet werden. Durch diese Fluidkanalbereiche kann das Fluid im geöffneten Zustand des Ventils vom Einlass zum Auslass fließen. Die Fluidkanalbereiche ermöglichen eine örtliche Konzentration des Fluidflusses mit hoher Fließgeschwindigkeit, was wiederum vorteilhaft für die Vermeidung von Toträumen bzw. die Schaffung eines strömungsoptimierten Ventils ist.

Gemäß einem Ausführungsbeispiel wird die Oberflächenkonturierung an der Außenseite des Ventilkörpers durch mehrere umfangsseitig verteilt angeordnete Einkerbungen gebildet, die sich zwischen dem ersten und zweiten Ende des Ventilkörpers erstrecken. Durch das Zusammenwirken des Ventilgehäuses mit dem Ventilkörper werden mehrere umfangsseitig im Fluidkanal verteilt angeordnete Fluidkanalbereiche gebildet. Alternativ oder zusätzlich kann die Innenfläche des Ventilgehäuses in dem Fluidkanalbereich, in dem der Ventilkörper bewegt wird, mehrere Einkerbungen oder Gräben aufweisen, die im Zusammenwirken mit dem Ventilkörper Fluidkanalbereiche bilden.

Gemäß einem Ausführungsbeispiel weist das Ventilgehäuse im Bereich des Einlasses eine Düsenstruktur oder Innenflächenkonturierung auf, mittels der eine umfangsseitig verteilte Einleitung des über den Einlass zufließenden Fluids um den Ventilkörper herum bewirkt wird. Durch die Düsenstruktur oder Innenflächenkonturierung wird erreicht, dass der Fluidstrom vom Einlass zum umfangsseitigen Umströmen des Ventilkörpers aufgeweitet wird, wodurch der Strömungswiderstand des Ventils weiter reduziert wird.

Gemäß einem Ausführungsbeispiel ist die Düsenstruktur oder Innenflächenkonturierung derart ausgebildet, dass diese zumindest im geöffneten Zustand des Ventils ein Einströmen des Fluids in die zwischen dem Ventilgehäuse und dem Ventilkörper gebildeten, umfangsseitig im Fluidkanal verteilt angeordneten Fluidkanalbereiche ermöglicht. Damit kann der Fluidstrom durch die Düsenstruktur oder Innenflächenkonturierung vorteilhaft auf die Fluidkanalbereiche aufgeteilt und dadurch der Strömungswiderstand weiter reduziert werden.

Gemäß einem Ausführungsbeispiel weist die Düsenstruktur oder die Innenflächenkonturierung einen oder mehrere Anschlagsbereiche auf, gegenüber denen der Ventilkörper im Bereich des ersten freien Endes bei geöffnetem Zustand des Ventils zur Anlage gelangt. Der zumindest eine Anschlagsbereich kann beispielsweise zwischen einem Paar von Düsen oder Einkerbungen der Düsenstruktur oder der Innenflächenkonturierung gebildet sein. Damit kann der Abschnitt des Ventilgehäuses, der die Düsenstruktur oder die Innenflächenkonturierung aufweist, auch zur Begrenzung des Verschiebewegs des Ventilkörpers verwendet werden. Für den Fall, dass der Abschnitt des Ventilgehäuses, der die Düsenstruktur oder die Innenflächenkonturierung aufweist, aus einem Ferritmaterial gebildet ist, kann bei der Anlage des Ventilkörpers an dem zumindest einen Anschlagsbereich der Magnetfluss in den Ventilkörper optimiert sein, da der Magnetkreis zwischen Ventilkörper und dem Abschnitt des Ventilgehäuses, der die Düsenstruktur oder die Innenflächenkonturierung aufweist, direkt geschlossen ist.

Gemäß einem Ausführungsbeispiel ist das Ventilgehäuse, insbesondere ein Ventilgehäuseunterteil des Ventilgehäuses, als Spritzgießteil ausgebildet. In das als Spritzgießteil ausgebildete Ventilgehäuseunterteil ist ein den Einlass bildender Gehäuseabschnitt eingesetzt, der die Düsenstruktur oder die Innenflächenkonturierung aufweist und der das Ventilgehäuseoberteil bildet. Dadurch lässt sich ein einfacher und kostengünstiger Aufbau des Ventils erreichen, da sich der Ventilkörper zunächst in den Fluidkanal des Ventilgehäuseunterteils einsetzen lässt und anschließend der das Ventilgehäuseoberteil bildende Gehäuseabschnitt einfügbar und mit dem Ventilgehäuseunterteil verbindbar ist. Die Verbindung kann dabei kraftschlüssig, stoffschlüssig und/oder formschlüssig sein.

Gemäß einem Ausführungsbeispiel ist der Gehäuseabschnitt, der das Ventilgehäuseoberteil bildet, aus einem Ferritmaterial gebildet oder der Gehäuseabschnitt weist zumindest teilweise ein Ferritmaterial auf. Der Gehäuseabschnitt kann insbesondere durch ein MIM-Verfahren (MIM: Metal Injection Moulding) hergestellt sein. Auch eine Herstellung durch eine spanende Bearbeitung des Ferritmaterials ist grundsätzlich möglich. Dadurch kann der magnetische Fluss des vom Elektromagneten erzeugten Magnetfeldes in den Ventilkörper entscheidend verbessert werden.

Gemäß einem Ausführungsbeispiel weist das Ventilgehäuse in dem Bereich, in dem der Ventilkörper in den Fluidkanal eingebracht ist, einen Wandungsbereich auf, der außenseitig direkt die elektrische Spule umfasst. Der Wandungsbereich ist insbesondere hülsenartig geformt und weist eine Wandstärke auf, die kleiner ist als der Radius des Fluidkanals, der durch den Wandungsbereich begrenzt ist. Der Radius des Fluidkanals ist vorzugsweise zumindest doppelt, insbesondere zumindest dreimal so groß wie die Wandstärke des Wandungsbereichs Insbesondere ist der Wandungsbereich direkt mit dem elektrischen Leiter der elektrischen Spule bewickelt. Dadurch lässt sich das Ventil zum einen kostengünstig herstellen, zum anderen kann die elektrische Spule sehr nahe an dem zu bewegenden Ventilkörper platziert werden, was vorteilhaft für die Einleitung des Magnetfeldes in den Ventilkörper ist.

Gemäß einem Ausführungsbeispiel ist das Ventilgehäuse als Spritzgießteil ausgebildet, wobei das Spritzgießteil außenseitig eine umfangsseitig umlaufende Mulde aufweist, die entlang der Längsachse des Fluidkanals seitlich durch ein Paar von Wandungsabschnitten begrenzt ist und in die die Wicklung der elektrischen Spule eingebracht ist. Das Ventilgehäuse kann insbesondere ein Kunststoffspritzgießteil sein. Alternativ kann das Ventilgehäuse auch aus einem Metall durch spanende Bearbeitung oder ein Metallspritzgießverfahren hergestellt sein. Radial innenseitig wird die Mulde durch den Wandungsbereich begrenzt, innerhalb dem der Fluidkanal ausgebildet ist. Diese Ausformung des Ventilgehäuses bietet den Vorteil, dass sich der Leiter der elektrischen Spule örtlich begrenzt und direkt in die Mulde des Ventilgehäuses einbringen lässt, was vorteilhaft für die Herstellung des Ventils und die Einleitung des von der elektrischen Spule erzeugten Magnetfeldes in den Ventilkörper ist.

Gemäß einem Ausführungsbeispiel ist der Ventilkörper mittels eines Metallpulverspritzgießverfahrens (MIM-Verfahren) hergestellt. Dadurch lässt sich der komplex geformte Ventilkörper auf einfache und kostengünstige Weise herstellen.

Gemäß einem Ausführungsbeispiel weist der Permanentmagnet eine Innenöffnung auf und ist auf das Ventilgehäuse aufgesteckt, so dass das Ventilgehäuse den Permanentmagneten durchdringt. Das Ventilgehäuse kann einen zylindrisch ausgebildeten Abschnitt aufweisen, auf den der Permanentmagnet aufgeschoben werden kann. Dadurch kann der Permanentmagnet in technisch einfacher Weise an dem Ventilgehäuse angeordnet werden, und zwar derart, dass dieser in Fließrichtung des Fluids gesehen unmittelbar unterhalb der elektrischen Spule zu liegen kommt.

Gemäß einem Ausführungsbeispiel ist der Permanentmagnet in Längsrichtung des Fluidkanals gesehen im Bereich des Ventilsitzes vorgesehen. Vorzugsweise umgibt der Permanentmagnet das Ventilgehäuse und den darin gebildeten Fluidkanal umfangsseitig auf Höhe des Ventilsitzes. Dadurch kann durch den Permanentmagneten eine vorteilhafte Krafteinleitung in den Ventilkörper erfolgen, um diesen am Dichtsitz anzupressen.

Gemäß einem Ausführungsbeispiel ist der Ventilsitz planar mit einer ringförmigen Dichtkante ausgebildet. Die Dichtkante bildet eine Erhebung, die in Richtung des Ventilkörpers von dem planaren Ventilsitz vorsteht. Die Dichtkante ist vorzugsweise in unmittelbarer Nähe zu der im Bereich des Ventilsitzes gebildeten Öffnung vorgesehen und umgibt diese außenumfangsseitig. Dadurch kann die Dichtigkeit des Ventils entscheidend verbessert werden.

Gemäß einem Ausführungsbeispiel ist der Ventilkörper zum zweiten freien Ende hin zulaufend ausgebildet. Dadurch kann das Fluid mit geringem Strömungswiderstand den Ventilkörper an dessen zweiten freien Ende umfließen und dem Auslass zugeleitet werden.

Gemäß einem Ausführungsbeispiel ist der Fluidkanal in einem unmittelbar in Fließrichtung des Fluids vor dem Ventilsitz liegenden Bereich zum Auslass hin zulaufend ausgebildet. Dadurch kann das Fluid mit hoher Strömungsgeschwindigkeit der im Ventilsitz ausgebildeten Öffnung oder dem Auslass zugeleitet werden.

Gemäß einem Ausführungsbeispiel weist der Ventilkörper im Bereich des zweiten freien Endes eine Ausnehmung auf, in die eine stopfenförmige Dichtung eingesetzt ist. Dadurch kann unterseitig in den Ventilkörper eine aus einem Vollmaterial bestehende, beispielsweise scheibenartige Dichtung eingesetzt werden. Die Dichtung kann derart ausgebildet sein, dass diese nach dem Einsetzen in die Ausnehmung gegenüber dem freien Ende des Ventilkörpers vorsteht. Der vorstehende Abschnitt der Dichtung kann eine Fase oder Abschrägung aufweisen. Dadurch wird die Umströmung des Ventilkörpers und der darin eingesetzten Dichtung weiter verbessert.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft einen Längsschnitt durch ein Ventil entlang dessen Längsachse im geschlossenen Zustand, in dem der Ventilkörper am Ventilsitz anliegt;
- Fig. 2: beispielhaft einen Längsschnitt durch ein Ventil entlang dessen Längsachse in der in Fig. 4 gezeigten Schnittebene A-A im geöffneten Zustand, in dem der Ventilkörper vom Ventilsitz abgehoben ist;
- Fig. 3: beispielhaft einen Längsschnitt durch ein Ventil entlang dessen Längsachse in der in Fig. 4 gezeigten Schnittebene B-B im geöffneten Zustand, in dem der Ventilkörper vom Ventilsitz abgehoben ist;
- Fig. 4: beispielhaft eine Querschnittsdarstellung durch ein Ventil im Bereich des Ventilkörpers in der in Fig.3 gezeigten Schnittebene C-C; und
- Fig. 5: beispielhaft eine Querschnittsdarstellung durch ein Ventil im Bereich des Ventilkörpers in der in Fig. 3 gezeigten Schnittebene D-D.

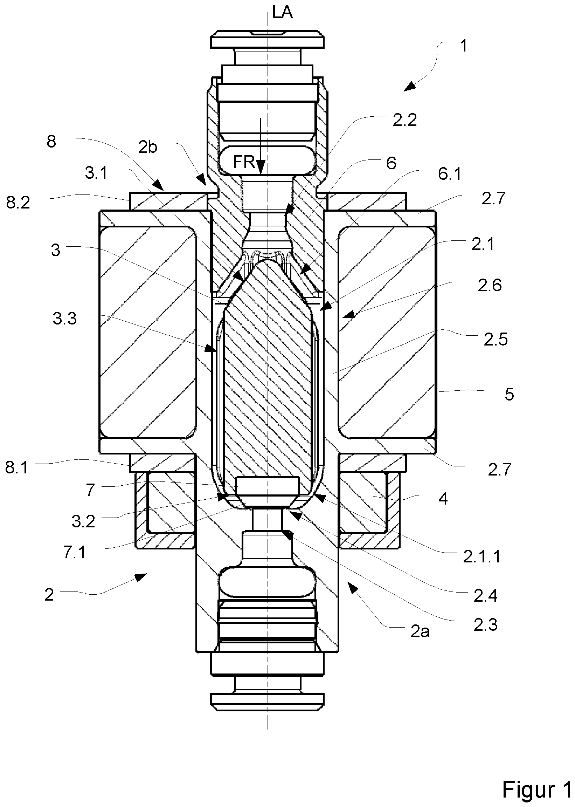

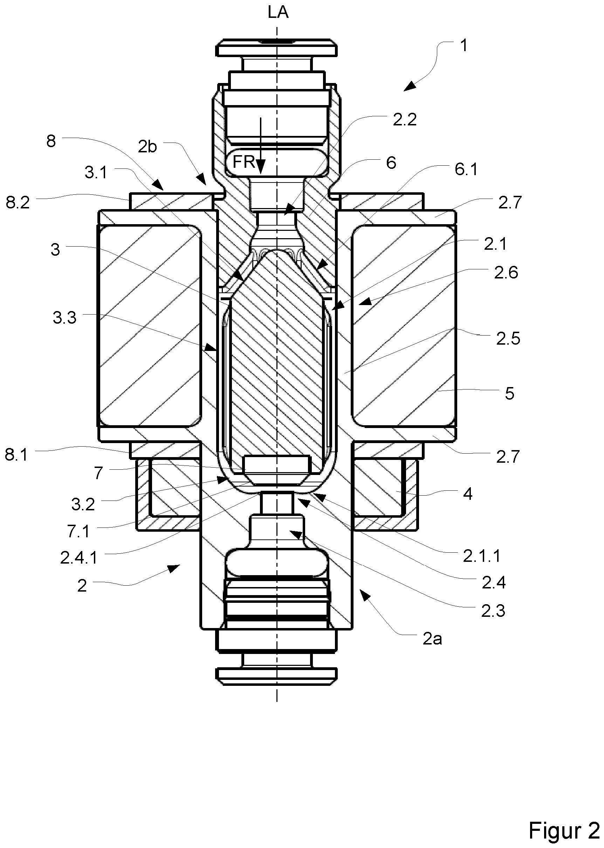

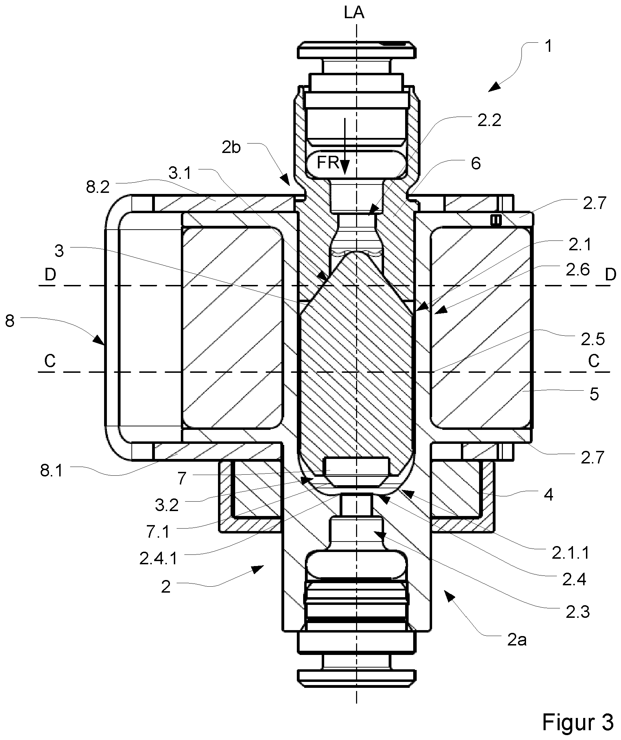

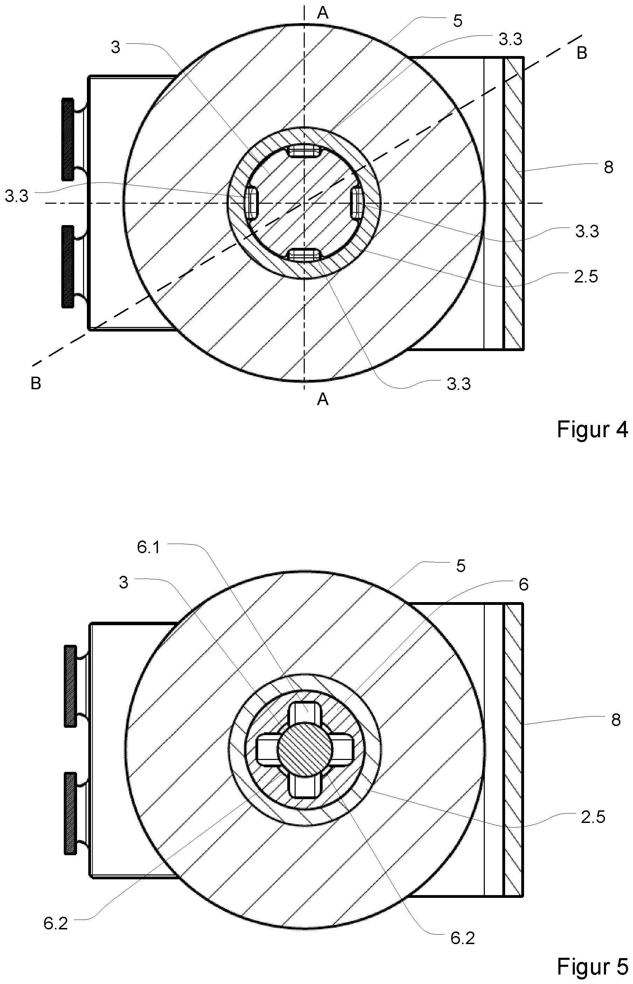

Figuren 1 bis 3 zeigen jeweils Schnittdarstellungen eines elektromagnetisch betätigten Ventils 1 zur Steuerung eines Fluidstroms, insbesondere eines Flüssigkeitsstroms. Figur 1 zeigt dabei das Ventil in geschlossener Stellung entlang der in Fig. 4 gezeigten Schnittlinie A-A, Fig. 2 das Ventil in geöffneter Stellung ebenfalls entlang der in Fig. 4 gezeigten Schnittlinie A-A und Fig. 3 das Ventil in geöffneter Stellung entlang der in Fig. 4 gezeigten Schnittlinie B-B.

Das Ventil 1 umfasst ein Ventilgehäuse 2, in dem ein Fluidkanal 2.1 ausgebildet ist. Das Ventilgehäuse 2 weist einen Einlass 2.2, einen Auslass 2.3 und einen Ventilsitz 2.4 auf. Die Fließrichtung FR des Fluids ist vom Einlass 2.2 über den Ventilsitz 2.4 zum Auslass 2.3 hin.

Im Ventilgehäuse 2 ist ein Ventilkörper 3 bewegbar, insbesondere translatorisch verschiebbar, um das Ventil 1 in einen geschlossenen bzw. einen geöffneten Zustand bringen zu können. Das Ventilgehäuse 2, insbesondere der im Ventilgehäuse 2 ausgebildete Fluidkanal 2.1 bildet eine Gleitführung für den Ventilkörper 3. Im geschlossenen Zustand liegt eine am Ventilkörper 3 vorgesehene Dichtung 7 auf dem Ventilsitz 2.4 auf, so dass der Fluidstrom durch das Ventil 1 unterbrochen ist. Im geöffneten Zustand ist der Ventilkörper 3 vom Ventilsitz 2.4 abgehoben, sodass das Ventil 1 vom Einlass 2.2 zum Auslass 2.3 von dem Fluid durchströmt werden kann. Der Ventilkörper 3 ist insbesondere gleitend im Fluidkanal 2.1 geführt, um die vorher beschriebene translatorische Bewegung zu vollziehen.

Zum Bewegen des Ventilkörpers 3 weist das Ventil 1 eine elektrische Spule 5 auf. Die elektrische Spule 5 ist außenseitig am Ventilgehäuse 2 vorgesehen und umgibt den Fluidkanal 2.1. Wird diese elektrische Spule 5 von einem elektrischen Strom durchflossen, wird durch die Spule 5 ein Magnetfeld erzeugt, das den Ventilkörper 3 vom Ventilsitz 2.4 abheben lässt, so dass dadurch das Ventil 1 geöffnet wird.

Das Ventil 1 weist zudem einen Permanentmagneten 4 auf. Der Permanentmagnet 4 ist ebenfalls am Ventilgehäuse 2 angeordnet und dazu ausgebildet, die Rückstellung des Ventilkörpers 3 in die geschlossene Position zu bewirken. In anderen Worten wird der Ventilkörper 3 durch den Permanentmagneten 4 in der geschlossenen Position gehalten, wenn die Spule 5 nicht von Strom durchflossen ist, so dass der Ventilkörper 3 vom Ventilsitz 2.4 abgehoben wird. Dadurch kann auf eine Feder zum Rückstellen des Ventilkörpers 3 verzichtet werden.

Das Ventil 1 ist als direktwirkendes Ventil ausgebildet, d.h. der zum Öffnen und Schließen des Ventils 1 bewegte, insbesondere translatorisch bewegte Ventilkörper 3 bildet direkt den Anker des elektromagnetischen Antriebs des Ventils 1. Das Ventil 1 bildet insbesondere ein monostabiles Ventil, d.h. die Rückstellung des Ventilkörpers 3 erfolgt mittels des Permanentmagneten 4, und zwar derart, dass die auf den Ventilkörper 3 mittels des Permanentmagneten 4 aufgebrachte Kraft nach dem Reduzieren bzw. Abschalten des Stromflusses durch die Spule 5 des Elektromagneten diesen Ventilkörper 3 auf den Ventilsitz 2.4 drückt. Bei Strombeaufschlagung der Spule 5 wird die Magnetkraft des Permanentmagneten 4 auf den Ventilkörper 3 überwunden, so dass der Ventilkörper 3 vom Ventilsitz 2.4 abgehoben wird. Damit weist das Ventil 1 keine Feder zum Rückstellen des Ventilkörpers 3 in die geschlossene Position auf, was vorteilhaft für hygienesensitive Anwendungen ist.

Das Ventil 1 ist strömungsoptimiert und totraumfrei ausgebildet, so dass dieses insbesondere für den Einsatz in hygiene-sensitiven Anwendungen geeignet ist.

Zur Erreichung einer verbesserten Durchströmung und Totraumfreiheit des Ventils ist der Ventilkörper 3 direkt im Fluidkanal 2.1 angeordnet, und zwar derart, dass die Längsachse des Ventilkörpers 3 mit der Längsachse LA des Fluidkanals 2.1 zusammenfällt. Dadurch wird erreicht, dass durch eine translatorische Bewegung des Ventilkörpers 3 entlang der Längsachse LA des Fluidkanal 2.1 das Ventil 1 geöffnet und geschlossen werden kann und der Ventilkörper 3 entlang dessen Außenfläche umströmt wird.

Der Ventilkörper 3 weist keinerlei Kanäle oder Durchbrüche auf, durch die das Fluid auf dessen Strömungsweg vom Einlass zum Auslass hindurchfließt. Der Ventilkörper 3 wird lediglich außenseitig von Fluid umflossen.

Zur Strömungsoptimierung weist der Ventilkörper 3 ein dem Einlass zugewandtes erste freies Ende 3.1 auf, das zulaufend ausgebildet ist. Die Spitze des Ventilkörpers 3 im Bereich des ersten freien Endes 3.1 ist vorzugsweise abgerundet ausgebildet. Insbesondere weist das erste freie Ende 3.1 eine zulaufende, insbesondere konisch zulaufende Form auf. Dadurch wird das auf das erste freie Ende 3.1 auftreffende Fluid durch die abgeschrägten Flächen entlang der Außenwandung des Ventilkörpers 3 geleitet, so dass sich eine vorteilhafte Umströmung des Ventilkörpers 3 ergibt.

Vorzugsweise weist der Ventilkörper 3 an dessen Außenseite Einkerbungen 3.3 auf, die entlang dessen Längsachse verlaufen, d.h. vom ersten freien Ende 3.1 zum zweiten freien Ende 3.2 hin. Vorzugsweise sind mehrere Einkerbungen 3.3 umfangseitig verteilt um den Ventilkörper 3 herum vorgesehen. Durch diese Einkerbungen 3.3 werden an der Außenfläche des Ventilkörpers 3 Fluidkanalbereiche gebildet, in und entlang denen das Fluid in Richtung des Auslasses 2.3 fließen kann.

Vorzugsweise werden durch die Einkerbungen 3.3 und die den Ventilkörper 3 umgebenden Wandungsbereich 2.5 des Ventilgehäuses 2 Kanäle gebildet, durch die das Fluid in Richtung des Auslasses 2.3 fließen kann. Die umfangseitig zwischen einem Paar von Einkerbungen 3.3 befindlichen Bereiche des Ventilkörpers 3 dienen der Gleitführung des Ventilkörpers 3 innerhalb des Ventilgehäuses 2.

Alternativ oder zusätzlich zu den Einkerbungen 3.3 im Ventilkörper 3 können an der Innenfläche des Wandungsbereichs 2.5, der den Ventilkörper 3 umgibt und in dem der Ventilkörper 3 gleitend geführt ist, Einkerbungen gebildet sein, mittels denen umfangsseitig verteilt um den Ventilkörper 3 herum mehrere Fluidkanalbereiche gebildet werden.

Vorzugsweise weist der Wandlungsbereich 2.5 des Ventilgehäuses 2 einen kreisförmigen oder im Wesentlichen kreisförmigen Innenquerschnitt auf, sodass sich der Ventilkörper 3 um dessen Längsachse herum frei im Fluidkanal drehen kann.

Das Ventilgehäuse 2 weist einen Gehäuseabschnitt 6 auf, mittels dem das Fluid auf den Ventilkörper 3 zugeleitet wird. Der Gehäuseabschnitt 6 bildet beispielsweise den Einlass 2.2 des Ventils 1. Der Gehäuseabschnitt 6 kann eine Innenflächenkonturierung 6.1 oder eine Düsenstruktur aufweisen, mittels der das einströmende Fluid aufgefächert und den Kanälen zugeleitet wird, die zwischen dem Ventilkörper 3 und dem Wandungsbereich 2.5 des Ventilgehäuses 2 gebildet werden. Dadurch wird erreicht, dass das Fluid zielgerichtet in die Bereiche geleitet wird, in denen das Fluid an der Außenseite des Ventilkörpers 3 entlang in Richtung des Auslasses 2.3 abfließen kann.

Wie in den Schnittdarstellungen der Figuren 4 und 5 zu erkennen, kann die Innenflächenkonturierung 6.1 mehrere Gräben oder Einkerbungen aufweisen, deren Anzahl mit der Anzahl der am Ventilkörper 3 vorgesehenen Einkerbungen 3.3 übereinstimmt. Dadurch kann eine zielgerichtete Einleitung in die Kanäle erfolgen. Für den Fall, dass der Ventilkörper 3 um dessen Längsachse herum frei drehbar im Fluidkanal 2.1 ist, richtet sich dieser in seiner Drehlage derart aus, dass die Einkerbungen 3.3 des Ventilkörpers 3 mit den Einkerbungen der Innenflächenkonturierung 6.1 zusammenfallen. Dadurch wird das Umströmen des Ventilkörpers 3 verbessert bzw. der Strömungswiderstand des Ventils 1 reduziert.

Wie insbesondere in den Figuren 3 und 5 zu erkennen, weist der Gehäuseabschnitt 6 Anschlagsbereiche 6.2 auf, an denen der Ventilkörper 3 in seiner geöffneten Stellung zur Anlage gelangt. Die Anschlagsbereiche 6.2 verlaufen beispielsweise schräg zur Längsachse LA des Fluidkanals 2.1 und dienen als Begrenzung des Verschiebewegs des Ventilkörpers 3, wie dies in Fig. 3 zu erkennen ist. Die Anschlagsbereiche 6.2 sind beispielsweise jeweils zwischen einem Paar von Gräben oder Einkerbungen der Innenflächenkonturierung 6.1 oder einem Paar von Düsen der Düsenstruktur vorgesehen und stehen gegenüber diesen in Richtung des Ventilkörpers 3 vor.

Um das Umströmen des Ventilkörpers 3 im Bereich dessen zweiten freien Endes 3.2 zu verbessern, weist der Fluidkanal 2.1 unmittelbar vor dem Ventilsitz 2.4 einen verjüngten Bereich 2.1.1 auf. Dadurch kann das Fluid strömungsoptimiert in Richtung des Auslasses 2.3 geleitet werden. Der verjüngte Bereich 2.1.1 kann beispielsweise gerundete oder konkav gewölbte Bereiche aufweisen, um das Zuleiten des Fluid in Richtung des Auslasses 2.3 zu verbessern.

Der Ventilkörper 3 weist im Bereich seines zweiten freien Endes 3.2 eine Ausnehmung auf, in die die Dichtung 7 eingesetzt ist. Die Dichtung 7 kann beispielsweise aus einem Vollmaterial gebildet und stopfenartig ausgebildet sein. Die Dichtung 7 ist mit einem ersten Abschnitt in die Ausnehmung eingebracht und steht mit einem zweiten Abschnitt gegenüber dem zweiten freien Ende 3.2 des Ventilkörpers 3 vor. Im geschlossenen Zustand des Ventils 1 gelangt diese Dichtung 7 an dem Ventilsitz 2.4 zur Anlage und dichtet damit die im Bereich des Ventilsitzes 2.4 vorgesehene Öffnung fluiddicht ab.

Der gegenüber dem zweiten freien Ende 3.2 des Ventilkörpers 3 vorstehende zweite Abschnitt der Dichtung 7 weist umfangseitig eine Abschrägung 7.1 oder Fase auf. Durch diese Abschrägung oder Fase wird das Umstömen des Ventilkörpers 3 in Richtung des Auslasses 2.3 verbessert.

Das Ventilgehäuse 2 weist ein Ventilgehäuseunterteil 2a und ein Ventilgehäuseoberteil 2b auf. Das Ventilgehäuseunterteil 2a kann teilweise als Kunststoffspritzgussteil ausgebildet sein. Alternativ kann das Ventilgehäuseunterteil 2a auch aus Metall gebildet und durch spanende Bearbeitung oder alternativ durch ein Metallspritzgießverfahren hergestellt sein. Das Ventilgehäuseunterteil 2a bildet vorzugsweise einen Teil des Fluidkanals 2.1 aus, insbesondere den Teil, der die Gleitführung für den Ventilkörper 3 und den Auslass 2.3 bildet.

Das Ventilgehäuseoberteil 2b weist den Einlass 2.2, die Innenflächenkonturierung 6.1 oder die Düsenstruktur und die Anschlagsbereiche 6.2 auf. Der Ventilgehäuseoberteil 2b ist vorzugsweise durch den vorbeschriebenen, getrennten Gehäuseabschnitt 6 gebildet. Das Ventilgehäuseoberteil 2b ist abschnittsweise in eine am Ventilgehäuseunterteil 2a gebildete Öffnung eingesetzt und mit diesem Ventilgehäuseunterteil 2a fest verbunden. Durch das Zusammensetzen des Ventilgehäuseunterteils 2a mit dem Ventilgehäuseoberteil 2b wird das Ventilgehäuse 2 gebildet.

Das Ventilgehäuseunterteil 2a weist einen Wandungsbereich 2.5 auf, der beispielsweise rundrohrartig ausgebildet ist und der an der Innenfläche den Fluidkanal 2.1 begrenzt und die Gleitführung für den Ventilkörper 3 bildet. Außenseitig an diesem Wandungsbereich 2.5 ist eine einstückig mit diesem gebildete Spulenaufnahme vorgesehen, die zur direkten Bewicklung mit dem elektrischen Leiter der elektrischen Spule 5 ausgebildet ist. Die Spulenaufnahme weist beispielsweise eine Mulde 2.6 auf, die vorzugsweise umlaufend am Ventilgehäuse 2 ausgebildet ist. Sie wird vorzugsweise in radialer Richtung gesehen ("radial" in Bezug auf die Längsachse LA des Fluidkanals 2.1, der im Ventilgehäuse 2 gebildet ist) innenseitig durch den Wandungsbereich 2.5 und in Richtung der Längsachse LA des Fluidkanals 2.1 gesehen ober bzw. unterseitig durch ein Paar von Wandungsabschnitten 2.7 begrenzt. Die Mulde 2.6 verläuft vorzugsweise ringartig um den Fluidkanal 2.1 herum. Dadurch lässt sich der Wandungsbereich 2.5, durch den der Fluidkanal 2.1 in radialer Richtung begrenzt wird, direkt mit dem Leiter der elektrischen Spule 5 bewickeln. Dies ist vorteilhaft für die Einleitung des Magnetfelds in den als Anker ausgebildeten Ventilkörper 3, da der radiale Abstand der Spule 5 zum Anker reduziert werden kann.

Das Ventilgehäuse 2 weist zudem eine Aufnahme für den Permanentmagnet 4 auf. Vorzugsweise weist das Ventilgehäuse 2, insbesondere das Ventilgehäuseunterteil 2a, einen außenseitig zylindrisch ausgebildeten Gehäuseabschnitt auf, auf den sich ein ringförmig ausgebildeter Permanentmagnet 4 mit dessen kreisförmiger Innenöffnung aufschieben lässt. Dadurch kann der Permanentmagnet 4 in vorteilhafter Weise mit dem Ventilgehäuse 2 verbunden werden. Alternativ kann der Permanentmagnet 4 auch eine von der Kreisringform abweichende Umfangskontur aufweisen, beispielsweise quadratisch oder rechteckförmig gebildet sein. Weiterhin alternativ kann der Permanentmagnet 4 auch durch einen oder mehrere Stabmagnete gebildet sein, die in eine oder mehrere Ausnehmungen, die am Ventilgehäuse 2 gebildet sind, eingesetzt sind.

Die Aufnahme für den Permanentmagnet 4 ist vorzugsweise am Ventilgehäuse 2 in einer Höhenlage (in Richtung der Längsachse LA des Fluidkanals 2.1 gesehen) vorgesehen, in der sich der Ventilsitz 2.4 befindet. Dadurch ist der Permanentmagnet 4 sehr nahe an dem Ventilkörper 3 angeordnet, was eine vorteilhafte Krafteinleitung zur Rückstellung und zum Andrücken des Ventilkörpers 3 an den Ventilsitz 2.4 ermöglicht.

Der Ventilsitz 2.4 weist vorzugsweise eine umfangsseitig um die Öffnung, die am Ventilsitz 2.4 gebildet ist, herum verlaufende Dichtkante 2.4.1 auf. Die Dichtkante 2.4.1 kann beispielsweise durch eine ringartige Erhebung gebildet sein. Durch die Dichtkante 2.4.1 wird die Dichtigkeit des Ventils 1 im geschlossenen Zustand insbesondere bei geringen Anpressdrücken des Ventilkörpers 3 an den Ventilsitz 2.4 verbessert.

Das Ventil 1 weist weitere Maßnahmen zur Verbesserung des durch die elektrische Spule 5 erzeugten Magnetflusses in den zu bewegenden Ventilkörper 3 auf.

Der Ventilkörper 3 besteht zumindest größtenteils, insbesondere vollständig aus einem Ferritmaterial. Insbesondere kann der Ventilkörper 3 mittels eines MIM-Verfahrens (MIM: Metal Injection Molding) hergestellt sein. Dadurch lässt sich der komplex geformte Ventilkörper 3 vorteilhaft herstellen.

Vorteilhafterweise ist auch das Ventilgehäuseoberteil 2b aus einem Ferritmaterial gebildet. Insbesondere kann das Ventilgehäuseoberteil 2b mittels eines MIM-Verfahrens (MIM: Metal Injection Molding) hergestellt sein. Dadurch wird erreicht, dass das durch die elektrische Spule 5 erzeugte magnetische Feld durch das Ventilgehäuseoberteil 2b vorteilhaft in den Ventilkörper 3 eingeleitet wird und dadurch Verluste im magnetischen Kreis reduziert werden. Vorzugsweise liegt der Ventilkörper 3 mit dessen Ferritmaterial direkt an den Anschlagsbereichen 6.2, die ebenfalls aus Ferritmaterial gebildet sind, an, so dass das Magnetfeld ohne Überwinden eines Luftspalts oder einem Materialbereich aus Nicht-Ferritmaterial vom Ventilgehäuseoberteil 2b in den Ventilkörper 3 geleitet wird.

Vorteilhafterweise ist die elektrische Spule 5 zumindest abschnittsweise von einem Flussbügel 8 umgeben. Mittels des Flussbügels 8 wird eine Bündelung und räumliche Konzentration des Magnetfeldes, das von der elektrischen Spule 5 erzeugt wird, erreicht. Der Flussbügel 8 kann beispielsweise außenseitig auf das Ventilgehäuse 2 aufgebracht sein.

Der Flussbügel 8 weist vorzugsweise einen ersten Flussbügelabschnitt 8.1 auf, der, in Richtung der Längsachse LA des Fluidkanals 2.1 gesehen zwischen dem Permanentmagnet 4 und der elektrischen Spule 5 angeordnet ist. Dieser erste Flussbügelabschnitt 8.1 reicht außenseitig vorzugsweise bis an den Wandungsabschnitt 2.5 heran und bewirkt damit eine vorteilhafte Leitwirkung des Magnetfeldes im Bereich des zweiten freien Endes 3.2 des Ventilkörpers 3. Vorzugsweise kann in dem Bereich des Wandungsabschnitts 2.5, an den der erste Flussbügelabschnitt 8.1 heranreicht, ein Metalleinsatz in den Wandungsabschnitt 2.5 integriert sein. Dies kann beispielsweise durch ein Umspritzen eines Metallteils in dem Spritzgussverfahren, durch das das Ventilgehäuseunterteil 2a hergestellt wird, erfolgen. Dadurch kann der Magnetfluss von dem ersten Flussbügelabschnitt 8.1 über den aus einem Nicht-Ferritmaterial bestehenden Wandungsabschnitt 2.5 hinweg in den Ventilkörper 3 verbessert werden.

Der Flussbügel 8 weist vorzugsweise einen zweiten Flussbügelabschnitt 8.2 auf, der im Bereich des Ventilgehäuseoberteils 2b vorgesehen ist. Vorzugsweise ist der zweite Flussbügelabschnitt 8.2 bis an das zweite Ventilgehäuseoberteil 2b herangeführt, so dass der zweite Flussbügelabschnitt 8.2 an dem zweiten Ventilgehäuseoberteil 2b anliegt. Durch die Verbindung zwischen dem zweiten Flussbügelabschnitt 8.2 und dem zweiten Ventilgehäuseoberteil 2b wird erreicht, dass das Magnetfeld ohne Überwinden eines Luftspalts oder einem Materialbereich aus Nicht-Ferritmaterial vom zweiten Flussbügelabschnitt 8.2 in das Ventilgehäuseoberteil 2b geleitet wird.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Ventil
- 2: Ventilgehäuse
- 2a: Ventilgehäuseunterteil
- 2b: Ventilgehäuseoberteil
- 2.1: Fluidkanal
- 2.1.1: verjüngter Bereich des Fluidkanals
- 2.2: Einlass
- 2.3: Auslass
- 2.4: Ventilsitz
- 2.4.1: Dichtkante
- 2.5: Wandungsbereich
- 2.6: Mulde
- 2.7: Wandungsabschnitt
- 3: Ventilkörper
- 3.1: erstes freies Ende
- 3.2: zweites freies Ende
- 3.3: Einkerbung
- 4: Permanentmagnet
- 5: elektrische Spule
- 6: Gehäuseabschnitt
- 6.1: Innenflächenkonturierung
- 6.2: Anschlagsbereich
- 7: Dichtung
- 7.1: Abschrägung
- 8: Flussbügel
- 8.1: erster Flussbügelabschnitt
- 8.2: zweiter Flussbügelabschnitt
- FR: Fließrichtung
- LA: Längsachse

## Patentansprüche

1. Ventil zur Steuerung eines Fluidstroms umfassend:
- ein Ventilgehäuse (2) mit einem Fluidkanal (2.1), das einen Einlass (2.2), einen Auslass (2.3) und einen Ventilsitz (2.4) aufweist;
- einen im Ventilgehäuse (2) bewegbaren Ventilkörper (3) zum Öffnen und Schließen des Ventils (1);
- einen am Ventilgehäuse (2) vorgesehenen Permanentmagneten (4);
- eine am Ventilgehäuse (2) angeordnete elektrische Spule (5) zur Erzeugung eines auf den Ventilkörper (3) wirkenden Magnetfeldes;
wobei der Ventilkörper (3) entlang der Längsachse (LA) des Fluidkanals (2.1) in dem Ventilgehäuse (2) verschiebbar ist, wobei der Ventilkörper (3) ein dem Einlass (2.2) zugewandtes erstes freies Ende (3.1) und ein dem Auslass (2.3) zugewandtes zweites freies Ende (3.2) aufweist, wobei der Ventilkörper (3) mit seinem zweiten freien Ende (3.2) mit dem Ventilsitz (2.4) zusammenwirkt, um das Ventil (1) zu öffnen oder zu schließen, wobei der Ventilkörper (3) zumindest teilweise aus einem Ferritmaterial gebildet ist und einen Anker bildet, der mit dem Permanentmagneten (4) und der elektrischen Spule (5) zusammenwirkt, wobei der Permanentmagnet (4) dazu ausgebildet ist, auf den Ventilkörper (3) eine in Richtung des Ventilsitzes (2.4) wirkende Kraft aufzubringen und damit das Ventil (1) zu schließen, wobei der Ventilkörper (3) bei Beaufschlagung der Spule (5) mit elektrischem Strom vom Ventilsitz (2.4) abhebbar ist, um das Ventil (1) zu öffnen, wobei der Ventilkörper (3) zum ersten freien Ende hin zulaufend ausgebildet ist und wobei der Ventilkörper (3) von dem durch den Fluidkanal (2.1) fließenden Fluid außenseitig umströmt wird.

2. Ventil nach Anspruch 1, **dadurch gekennzeichnet, dass** der Ventilkörper (3) außenseitig und/oder die Innenfläche des Ventilgehäuses (2) in dem Fluidkanalbereich, in dem der Ventilkörper (3) bewegt wird, eine Oberflächenkonturierung aufweist, mittels der umfangsseitig um den Ventilkörper (3) herum verteilt mehrere Fluidkanalbereiche gebildet werden, durch die das Fluid im geöffneten Zustand des Ventils (1) vom Einlass (2.2) zum Auslass (2.3) fließen kann.

3. Ventil nach Anspruch 2, **dadurch gekennzeichnet, dass** die Fluidkanalbereiche:
- durch mehrere an der Außenseite des Ventilkörpers (3) umfangsseitig verteilt angeordnete, sich zwischen dem ersten und zweiten Ende des Ventilkörpers (3) erstreckende Einkerbungen (3.3); und/oder
- durch mehrere Einkerbungen oder Gräben, die an der Innenfläche des Ventilgehäuses (2) in dem Fluidkanalbereich, in dem der Ventilkörper (3) bewegt wird, vorgesehen sind,
gebildet werden.

4. Ventil nach einem der vorhergehenden Ansprüche, **dadurch gekennzeichnet, dass** das Ventilgehäuse (2) im Bereich des Einlasses (2.2) eine Düsenstruktur oder Innenflächenkonturierung (6.1) aufweist, mittels der eine umfangsseitig verteilte Einleitung des über den Einlass (2.2) zufließenden Fluids um den Ventilkörper (3) herum bewirkt wird.

5. Ventil nach Anspruch 4, **dadurch gekennzeichnet, dass** die Düsenstruktur oder Innenflächenkonturierung (6.1) derart ausgebildet ist, dass diese zumindest im geöffneten Zustand des Ventils (3) ein Einströmen des Fluids in die zwischen dem Ventilgehäuse (2) und dem Ventilkörper (3) gebildeten, umfangsseitig im Fluidkanal (2.1) verteilt angeordneten Fluidkanalbereiche ermöglicht.

6. Ventil nach Anspruch 4 oder 5, **dadurch gekennzeichnet, dass** die Düsenstruktur oder die Innenflächenkonturierung (6.1) einen oder mehrere Anschlagsbereiche (6.2) aufweist, gegenüber denen der Ventilkörper (3) im Bereich des ersten freien Endes (3.1) bei geöffnetem Zustand des Ventils (1) zur Anlage gelangt.

7. Ventil nach einem der Ansprüche 4 bis 6, **dadurch gekennzeichnet, dass** das Ventilgehäuse (2) als Spritzgießteil ausgebildet ist, wobei in das Spritzgießteil ein den Einlass (2.2) bildender Gehäuseabschnitt (6) eingesetzt ist, der die Düsenstruktur oder die Innenflächenkonturierung (6.1) aufweist.

8. Ventil nach Anspruch 7, **dadurch gekennzeichnet, dass** der Gehäuseabschnitt (6) aus einem Ferritmaterial gebildet ist oder zumindest teilweise ein Ferritmaterial aufweist.

9. Ventil nach einem der vorhergehenden Ansprüche, **dadurch gekennzeichnet, dass** das Ventilgehäuse (2) in dem Bereich, in dem der Ventilkörper (3) in den Fluidkanal (2.1) eingebracht ist, einen Wandungsbereich (2.5) aufweist, der außenseitig direkt die elektrische Spule (5) aufweist.

10. Ventil nach Anspruch 9, **dadurch gekennzeichnet, dass** das Ventilgehäuse (2) als Spritzgießteil ausgebildet ist, wobei das Spritzgießteil außenseitig eine umfangsseitig umlaufende Mulde (2.6) aufweist, die entlang der Längsachse (LA) des Fluidkanals (2.1) seitlich durch ein Paar von Wandungsabschnitten (2.7) begrenzt ist und in die die Wicklung der elektrischen Spule (5) eingebracht ist.

11. Ventil nach einem der vorhergehenden Ansprüche, **dadurch gekennzeichnet, dass** der Ventilkörper (3) mittels eines Metallpulverspritzgießverfahrens oder durch spanende Bearbeitung hergestellt ist.

12. Ventil nach einem der vorhergehenden Ansprüche, **dadurch gekennzeichnet, dass** der Permanentmagnet (4) eine Innenöffnung aufweist und auf das Ventilgehäuse (2) aufgesteckt ist, so dass das Ventilgehäuse (2) den Permanentmagneten (4) durchdringt.

13. Ventil nach einem der vorhergehenden Ansprüche, **dadurch gekennzeichnet, dass** der Permanentmagnet (4) in Längsrichtung des Fluidkanals (2.1) gesehen im Bereich des Ventilsitzes (2.4) vorgesehen ist.

14. Ventil nach einem der vorhergehenden Ansprüche, **dadurch gekennzeichnet, dass** der Ventilsitz (2.4) planar mit einer ringförmigen Dichtkante (2.4.1) ausgebildet ist.

15. Ventil nach einem der vorhergehenden Ansprüche, **dadurch gekennzeichnet, dass** der Ventilkörper (3) zum zweiten freien Ende (3.2) hin zulaufend ausgebildet ist und/oder dass der Fluidkanal (2.1) in einem unmittelbar in Fließrichtung (FR) des Fluids vor dem Ventilsitz (2.4) liegenden Bereich zum Auslass (2.3) hin zulaufend ausgebildet ist.

## Claims

1. Valve for controlling a fluid flow, comprising:
- a valve housing (2) with a fluid channel (2.1), the housing comprising an inlet (2.2), an outlet (2.3) and a valve seat (2.4);
- a valve body (3) that can be moved in the valve housing (2) to open and close the valve (1);
- a permanent magnet (4) provided at the valve housing (2);
- an electric coil (5) arranged at the valve housing (2) for generating a magnetic field acting on the valve body (3);
wherein the valve body (3) is slidable along the longitudinal axis (LA) of the fluid channel (2.1) in the valve housing (2), wherein the valve body (3) comprises a first free end (3.1) facing the inlet (2.2) and a second free end (3.2) facing the outlet (2.3), wherein the valve body (3) interacts with the valve seat (2.4) by means of its second free end (3.2) in order to open or close the valve (1), wherein the valve body (3) is made at least partially from a ferrite material and forms an armature which interacts with the permanent magnet (4) and the electric coil (5), wherein the permanent magnet (4) is configured to apply a force acting in the direction of the valve seat (2.4) to the valve body (3) so as to close the valve (1), wherein the valve body (3) can be lifted off the valve seat (2.4) when an electric current is applied to the coil (5) in order to open the valve (1), wherein the valve body (3) tapers towards the first free end, and wherein the fluid flowing through the fluid channel (2.1) flows around the outside of the valve body (3).

2. Valve according to claim 1, **characterized in that**, a surface contouring is provided on the outside of the valve body (3) and/or on the inner surface of the valve housing (2) in the fluid channel region in which the valve body (3) is moved, the surface contouring providing a plurality of fluid channel regions distributed around the circumference of the valve body (3), through which fluid channel regions the fluid can flow from the inlet (2.2) to the outlet (2.3) when the valve (1) is in the open state.

3. Valve according to claim 2, **characterized in that** the fluid channel regions are formed:
- by a plurality of notches (3.3), which are arranged on the outside of the valve body (3) in such a way that they are distributed around the circumference and extend between the first and second end of the valve body (3); and/or
- by a plurality of notches or grooves which are provided at the inner surface of the valve housing (2) in the fluid channel region in which the valve body (3) is moved.

4. Valve according to any one of the preceding claims, **characterized in that** the valve housing (2) comprises, in the region of the inlet (2.2), a nozzle structure or inner surface contouring (6.1) which causes an introduction of the fluid flowing in via the inlet (2.2) circumferentially distributed around the valve body (3).

5. Valve according to claim 4, **characterized in that** the nozzle structure or inner surface contouring (6.1) is designed in such a way that, at least in the open state of the valve (3), it renders possible the fluid to flow into the fluid channel regions, which are formed between the valve housing (2) and the valve body (3) and which are arranged in such a way that they are circumferentially distributed in the fluid channel (2.1).

6. Valve according to claim 4 or 5, **characterized in that** the nozzle structure or the inner surface contouring (6.1) has one or more stop regions (6.2), at which the valve body (3) abuts in the region of the first free end (3.1) when the valve (1) is in the open state.

7. Valve according to any one of claims 4 to 6, **characterized in that** the valve housing (2) is designed as an injection-moulded part, a housing portion (6) forming the inlet (2.2) being inserted into the injection-moulded part and this housing portion comprising the nozzle structure or the inner surface contouring (6.1).

8. Valve according to claim 7, **characterized in that** the housing portion (6) is made from a ferrite material or at least partially includes a ferrite material.

9. Valve according to any one of the preceding claims, **characterized in that** the valve housing (2) comprises, in the region in which the valve body (3) is introduced into the fluid channel (2.1), a wall region (2.5), wherein the electric coil (5) is directly provided on the outside of the wall region.

10. Valve according to claim 9, **characterized in that** the valve housing (2) is designed as an injection-moulded part, the injection-moulded part comprising on the outside a circumferential recess (2.6) which is bounded laterally along the longitudinal axis (LA) of the fluid channel (2.1) by a pair of wall regions (2.7) and into which the winding of the electric coil (5) is introduced.

11. Valve according to any one of the preceding claims, **characterized in that** the valve body (3) is made by means of a metal powder injection moulding process or by machining.

12. Valve according to any one of the preceding claims, **characterized in that** the permanent magnet (4) has an inner opening and is placed on the valve housing (2) so that the valve housing (2) penetrates the permanent magnet (4).

13. Valve according to any one of the preceding claims, **characterized in that** the permanent magnet (4) is provided in the region of the valve seat (2.4), when viewed in the longitudinal direction of the fluid channel (2.1).

14. Valve according to any one of the preceding claims, **characterized in that** the valve seat (2.4) is designed to be planar with an annular sealing edge (2.4.1).

15. Valve according to any one of the preceding claims, **characterized in that** the valve body (3) tapers towards the second free end (3.2), and/or **in that** the fluid channel (2.1) tapers towards the outlet (2.3) in a region lying, when viewed in the direction of flow (FR) of the fluid, directly in front of the valve seat (2.4).

## Revendications

1. Vanne de commande d'un écoulement de fluide, comprenant :
- un boîtier de vanne (2) ayant un canal à fluide (2.1) et présentant une entrée (2.2), une sortie (2.3) et un siège de vanne (2.4) ;
- un corps de vanne (3) mobile dans le boîtier de vanne (2) pour ouvrir et fermer la vanne (1) ;
- un aimant permanent (4) prévu sur le boîtier de vanne (2) ;
- une bobine électrique (5) disposée sur le boîtier de vanne (2) pour engendrer un champ magnétique agissant sur le corps de vanne (3) ;
dans laquelle
le corps de vanne (3) peut être déplacé le long de l'axe longitudinal (LA) du canal à fluide (2.1) dans le boîtier de vanne (2),
le corps de vanne (3) présente une première extrémité libre (3.1) tournée vers l'entrée (2.2) et une deuxième extrémité libre (3.2) tournée vers la sortie (2.3),
le corps de vanne (3) coopère par sa deuxième extrémité libre (3.2) avec le siège de vanne (2.4) pour ouvrir ou fermer la vanne (1),
le corps de vanne (3) est formé au moins partiellement d'un matériau de ferrite et constitue un induit qui coopère avec l'aimant permanent (4) et la bobine électrique (5),
l'aimant permanent (4) est conçu pour exercer sur le corps de vanne (3) une force qui agit en direction du siège de vanne (2.4) et pour ainsi fermer la vanne (1),
le corps de vanne (3) peut être soulevé du siège de vanne (2.4) lorsque la bobine (5) est alimentée en courant électrique, afin d'ouvrir la vanne (1),
le corps de vanne (3) est réalisé de manière à se rétrécir vers la première extrémité libre, et
le corps de vanne (3) est entouré, sur la face extérieure, par le fluide s'écoulant à travers le canal à fluide (2.1).

2. Vanne selon la revendication 1,
**caractérisée en ce que** le corps de vanne (3), sur la face extérieure, et/ou la surface intérieure du boîtier de vanne (2), dans la zone du canal à fluide dans laquelle le corps de vanne (3) est déplacé, présente(nt) un contour de surface permettant de former plusieurs zones de canal à fluide réparties sur la périphérie autour du corps de vanne (3), à travers lesquelles le fluide peut s'écouler de l'entrée (2.2) vers la sortie (2.3) lorsque la vanne (1) est ouverte.

3. Vanne selon la revendication 2,
**caractérisée en ce que** les zones du canal à fluide sont formées
- par plusieurs encoches (3.3) réparties à la périphérie sur la face extérieure du corps de vanne (3) et s'étendant entre la première et la deuxième extrémité du corps de vanne (3) ; et/ou
- par plusieurs encoches ou tranchées prévues sur la surface intérieure du boîtier de vanne (2) dans la zone du canal à fluide dans laquelle le corps de vanne (3) est déplacé.

4. Vanne selon l'une des revendications précédentes,
**caractérisée en ce que** le boîtier de vanne (2) présente, dans la zone de l'entrée (2.2), une structure de buse ou un contour de surface intérieure (6.1) permettant d'introduire le fluide, arrivant par l'entrée (2.2), de manière à le répartir sur la périphérie autour du corps de vanne (3).

5. Vanne selon la revendication 4,
**caractérisée en ce que** la structure de buse ou le contour de surface intérieure (6.1) est conçu(e) de manière à permettre au fluide, au moins à l'état ouvert de la vanne (3), d'entrer dans les zones de canal à fluide formées entre le boîtier de vanne (2) et le corps de vanne (3) et réparties sur la périphérie dans le canal à fluide (2.1).

6. Vanne selon la revendication 4 ou 5,
**caractérisée en ce que** la structure de buse ou le contour de surface intérieure (6.1) présente une ou plusieurs zones de butée (6.2) contre lesquelles le corps de vanne (3) vient en appui dans la zone de la première extrémité libre (3.1), à l'état ouvert de la vanne (1).

7. Vanne selon l'une des revendications 4 à 6,
**caractérisée en ce que** le boîtier de vanne (2) est réalisé sous la forme d'une pièce moulée par injection, sachant qu'une partie de boîtier (6) qui forme l'entrée (2.2) et qui présente la structure de buse ou le contour de surface intérieure (6.1) est intégrée dans la pièce moulée par injection.

8. Vanne selon la revendication 7,
**caractérisée en ce que** la partie de boîtier (6) est formée d'un matériau de ferrite ou comprend au moins partiellement un matériau de ferrite.

9. Vanne selon l'une des revendications précédentes,
**caractérisée en ce que**, dans la zone dans laquelle le corps de vanne (3) est inséré dans le canal à fluide (2.1), le boîtier de vanne (2) présente une zone de paroi (2.5) qui comprend la bobine électrique (5) directement sur sa face extérieure.

10. Vanne selon la revendication 9,
**caractérisée en ce que** le boîtier de vanne (2) est réalisé sous la forme d'une pièce moulée par injection, la pièce moulée par injection présentant sur sa face extérieure une cavité (2.6) périphérique qui est délimitée latéralement le long de l'axe longitudinal (LA) du canal à fluide (2.1) par une paire de parties de paroi (2.7) et dans laquelle est inséré l'enroulement de la bobine électrique (5).

11. Vanne selon l'une des revendications précédentes,
**caractérisée en ce que** le corps de vanne (3) est fabriqué par un procédé de moulage par injection de poudre métallique ou par usinage par enlèvement de copeaux.

12. Vanne selon l'une des revendications précédentes,
**caractérisée en ce que** l'aimant permanent (4) présente une ouverture intérieure et est enfiché sur le boîtier de vanne (2), de sorte que le boîtier de vanne (2) traverse l'aimant permanent (4).

13. Vanne selon l'une des revendications précédentes,
**caractérisée en ce que** l'aimant permanent (4) est prévu dans la zone du siège de vanne (2.4), vu dans la direction longitudinale du canal à fluide (2.1).

14. Vanne selon l'une des revendications précédentes,
**caractérisée en ce que** le siège de vanne (2.4) est plan et présente une arête d'étanchéité annulaire (2.4.1).

15. Vanne selon l'une des revendications précédentes,
**caractérisée en ce que** le corps de vanne (3) est réalisé de manière à se rétrécir vers la deuxième extrémité libre (3.2), et/ou **en ce que** le canal à fluide (2.1) est réalisé de manière à se rétrécir vers la sortie (2.3) dans une zone située directement en amont du siège de vanne (2.4) dans le sens d'écoulement (FR) du fluide.
